# EUROPÄISCHE PATENTSCHRIFT

(11) **EP 2 596 890 B1**
(45) Veröffentlichungstag und Bekanntmachung des Hinweises auf die Patenterteilung: **04.01.2017**
(21) Anmeldenummer: 12193019.2
(22) Anmeldetag: 16.11.2012
(51) Int. Cl.: B23D 15/00, B23D 35/00, B26D 7/26

(54) **Vorrichtung zum Schneiden von dünnschichtigem Material**
Device for cutting thin film material
Dispositif de coupe d'un matériau à couche mince

(30) Priorität: 23.11.2011 DE 102011086963
(43) Veröffentlichungstag der Anmeldung: 29.05.2013
(73) Patentinhaber: Heinrich Georg GmbH Maschinenfabrik, 57223 Kreuztal (DE)
(72) Erfinder: Friedrich, Jost, 57271 Hilchenbach (DE); Hrncal, Michael, 57223 Kreuztal (DE); Klappert, Günter, 57223 Kreuztal (DE)
(74) Vertreter: advotec.

(56) Entgegenhaltungen:
- WO-A1-00/27575

## Beschreibung

Die Erfindung betrifft eine Vorrichtung zum Schneiden von dünnschichtigem Material, insbesondere von Metallbändern, Geweben, Kunststoffen, Papier, Karton, Verbundwerkstoffen o.dgl., das von Coils abgewickelt wird, wobei die Vorrichtung zwei sich mit ihren Schneiden gegenüberliegende und in einem Rahmen gelagerte Messer aufweist, von denen mindestens ein Messer in vertikaler Richtung zu dem anderen Messer hin verfahrbar ist, und wobei der Rahmen mit den Messern mittels eines in einem Grundrahmen der Vorrichtung angeordneten Drehantriebes um eine vertikale Achse aus seiner quer zur Laufrichtung des dünnschichtigen Materials verlaufenden Grundposition um einen bestimmten Winkel nach rechts und links schwenkbar ist.

Eine derartige Vorrichtung wird in der WO 0027575 A offenbart.

Bei derartigen bekannten Vorrichtungen, die beispielsweise bei Anlagen zur Herstellung von Transformatorenkernen, die aus einer Vielzahl von abgestapelten Blechen gebildet sind, zum Einsatz kommen, kommen in der Regel z. B. Synchron-Servoantriebe mit einem nachgeschalteten spielfreien Getriebe als Drehantrieb zum Einsatz, mit dem zum einen ein hohes Drehmoment und zum anderen eine relativ geringe Drehzahl erreicht wird. Durch die Notwendigkeit eines Getriebes zur Realisierung der zuvor genannten erforderlichen Eigenschaften erhöht sich einerseits der Platzbedarf für den gesamten Antrieb und andererseits entstehen relativ hohe Herstell-, Montage- und Betriebskosten. Zudem tritt bei den Getrieben ein systembedingter Verschleiß auf, so dass dasselbe repariert oder ausgetauscht werden muss. Dabei muss selbstverständlich die Vorrichtung bzw. die gesamte Anlage eine längere Zeit stillgesetzt werden, wodurch zeitliche Verzögerungen während der Produktion entstehen.

Der Erfindung liegt daher die Aufgabe zugrunde, eine Vorrichtung der angegebenen Gattung zu schaffen, deren Antrieb wesentlich weniger Platz benötigt, wobei ein hohes Drehmoment bei relativ geringer Drehzahl gewährleistet ist, und wesentlich weniger Montageaufwand erfordert, wobei die Kosten über dessen gesamte Lebensdauer reduziert sind. Diese Aufgabe wird erfindungsgemäß durch eine Vorrichtung mit den Merkmalen des Patentanspruchs 1 gelöst. Zweckmäßige Weiterbildungen sind in den Unteransprüchen gekennzeichnet.

Bei der erfindungsgemäßen Vorrichtung ist der Drehantrieb für den Rahmen getriebelos ausgebildet und weist einen permanentmagneterregten Synchronmotor auf, dessen Rotor direkt auf den Rahmen wirkt. Durch den permanentmagneterregten Synchronmotor wird ein für die Anwendung erforderliches hohes Drehmoment und eine für die Anwendung erforderliche relativ geringe Drehzahl gewährleistet, ohne dass ein Getriebe nachgeschaltet ist. Dadurch kann ein höherer Wirkungsgrad erreicht werden. Obwohl der permanentmagneterregte Synchronmotor in seinen Abmessungen größer ist als ein Synchron-Servoantrieb wird durch das fehlende Getriebe Platz eingespart, wobei auch der Montage- und der Wartungsaufwand des Drehantriebes wesentlich geringer ist. Zudem ist der gesamte Drehantrieb sehr geräuscharm.

Um beispielsweise bei der Verwendung der abgeschnittenen Bleche für Transformatorenkerne die Enden zur Bildung eines Gehrungsschnittes schräg abzuschneiden, ist der Schwenkwinkel des Rahmens bzw. des Drehantriebes variabel über die Anlagensteuerung frei programmierbar.

Das eine Messer ist an einem Messerbalken angeordnet, der zwischen den seitlichen Wangen des Rahmens vertikal geführt und gelagert ist. Zum vertikalen Verfahren des einen Messers bzw. des Messerbalkens ist ein zentral auf den Messerbalken wirkender weiterer Antrieb vorgesehen, der aus einem Servomotor mit von demselben angetriebenem Kugelgewindetrieb besteht.

Das andere Messer ist vorzugsweise fest mit einer unteren Traverse des Rahmens verbunden.

Nachfolgend wird anhand der Zeichnung eine bevorzugte Ausführungsform der Vorrichtung näher erläutert.

Es zeigen
- **Fig. 1**: eine Vorderansicht der erfindungsgemäßen Vorrichtung und
- **Fig. 2**: eine Draufsicht der Vorrichtung mit geschwenktem Rahmen bzw. Messer.

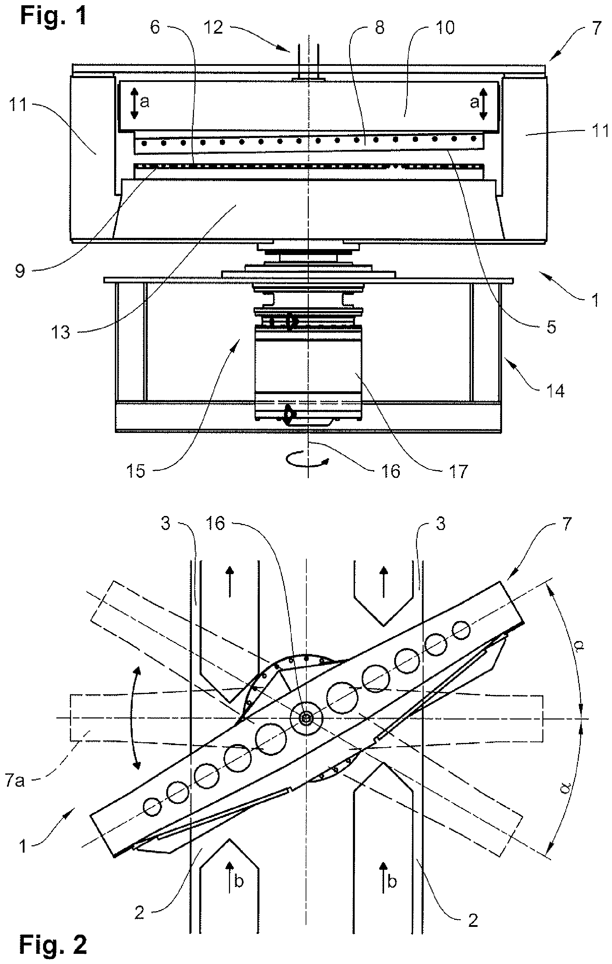

Die in **Fig. 1** und **2** vereinfacht dargestellte Vorrichtung 1 ist zum Schneiden von dünnschichtigem Material 2, insbesondere von Metallbändern, Geweben, Kunststoffen, Papier, Karton, Verbundwerkstoffen o.dgl. vorgesehen und wird beispielsweise in Anlagen zur Herstellung von Transformatorenkernen, die aus einer Vielzahl von abgestapelten Blechen 3 aus kornorientiertem Transformatorenband gebildet sind, eingesetzt. Dabei wird in der Anlage das dünnschichtige Material 2 von mindestens einem Coil kontinuierlich abgerollt (nicht dargestellt), nachfolgend das dünnschichtige Material 2 mit der Vorrichtung 1 auf Länge und Form zu Blechen 3 geschnitten, die Bleche 3 nach dem Schneiden über ein Transportrollen- und -bandsystem gefördert und auf einem oder mehreren Stapeltischen abgestapelt (ebenfalls nicht dargestellt).

Die Vorrichtung 1 weist zwei sich mit ihren Schneiden 5, 6 gegenüberliegende und in einem Rahmen 7 gelagerte Messer 8, 9 auf, von denen mindestens ein Messer 8 in vertikaler Richtung a zu dem anderen Messer 9 hin verfahrbar ist. Dabei ist das eine Messer 8 an einem Messerbalken 10 angeordnet, der zwischen den seitlichen Wangen 11 des Rahmens 7 vertikal geführt und gelagert ist.

Zum vertikalen Verfahren des einen Messers 8 bzw. des Messerbalkens 10 ist ein zentral auf den Messerbalken 10 wirkender Antrieb 12 vorgesehen, der beispielsweise ein Servomotor mit von demselben angetriebenem Kugelgewindetrieb sein kann.

Das andere Messer 9 ist bei dem vorliegenden und in **Fig. 1** und **2** dargestellten Ausführungsbeispiel fest mit einer unteren Traverse 13 des Rahmens 7 verbunden und somit in vertikaler Richtung feststehend ausgebildet. Selbstverständlich ist es auch zur Beschleunigung des Schnittvorgangs möglich, dass das andere Messer 9 ebenfalls in vertikaler Richtung zu dem einen Messer 8 hin verfahrbar ausgebildet ist. Dazu kann das andere Messer 9 an einem weiteren Messerbalken angeordnet sein, der ebenfalls zwischen den seitlichen Wangen 11 des Rahmens 7 vertikal geführt und gelagert ist und durch einen zentral auf diesen Messerbalken wirkenden weiteren Antrieb verfahrbar ist. Vorzugsweise kann dieser Antrieb wie der zuvor beschriebene Antrieb 12 ausgebildet sein.

Der Rahmen 7 ist mit den Messern 8, 9 mittels eines in einem Grundrahmen 14 der Vorrichtung 1 angeordneten Drehantriebes 15 um eine vertikale Achse 16 aus seiner quer zur Laufrichtung b des dünnschichtigen Materials 2 verlaufenden Grundposition 7a um einen bestimmten Winkel α variabel nach rechts und links schwenkbar, wobei der Schwenkwinkel α des Rahmens 7 bzw. des Drehantriebes 15 vorzugsweise über die Anlagensteuerung frei programmierbar ist. Die Einstellbarkeit des Schwenkwinkels α, der bis zu ±60° beträgt, ermöglicht eine Anpassung von schrägen Schnitten an den Enden der Bleche 3 an bestimmte Erfordernisse.

Um beim Schwenken des Rahmens 7 bzw. der Messer 8, 9 ein hohes Drehmoment bei relativ geringer Drehzahl zu erreichen, ist der Drehantrieb 15 für den Rahmen 7 mit den darin angeordneten Messern 8, 9 getriebelos ausgebildet und weist einen permanentmagneterregten Synchronmotor 17 auf, dessen Rotor direkt auf den Rahmen 7 wirkt.

## Patentansprüche

1. Vorrichtung (1) zum Schneiden von dünnschichtigem Material (2), insbesondere von Metallbändern, Geweben, Kunststoffen, Papier, Karton, Verbundwerkstoffen o.dgl., das von Coils abgewickelt wird, wobei die Vorrichtung (1) zwei sich mit ihren Schneiden (5, 6) gegenüberliegende und in einem Rahmen (7) gelagerte Messer (8, 9) aufweist, von denen mindestens ein Messer (8) in vertikaler Richtung (a) zu dem anderen Messer (9) hin verfahrbar ist, und wobei der Rahmen (7) mit den Messern (8, 9) mittels eines in einem Grundrahmen (14) der Vorrichtung (1) angeordneten Drehantriebes (15) um eine vertikale Achse (16) aus seiner quer zur Laufrichtung (b) des dünnschichtigen Materials (2) verlaufenden Grundposition (7a) um einen bestimmten Winkel (α) nach rechts und links schwenkbar ist, **dadurch gekennzeichnet,**
**dass** der Drehantrieb (15) für den Rahmen (7) getriebelos ausgebildet ist und einen permanentmagneterregten Synchronmotor (17) aufweist, dessen Rotor direkt auf den Rahmen (7) wirkt.

2. Vorrichtung nach Anspruch 1,
**dadurch gekennzeichnet,**
**dass** der Schwenkwinkel (α) des Rahmens (7) bzw. des Drehantriebes (15) variabel über die Anlagensteuerung frei programmierbar ist.

3. Vorrichtung nach Anspruch 1 oder 2,
**dadurch gekennzeichnet,**
**dass** das eine Messer (8) an einem Messerbalken (10) angeordnet ist, der zwischen den seitlichen Wangen (11) des Rahmens (7) vertikal geführt und gelagert ist.

4. Vorrichtung nach einem der Ansprüche 1 bis 3,
**dadurch gekennzeichnet,**
**dass** zum vertikalen Verfahren des einen Messers (8) bzw. des Messerbalkens (10) ein zentral auf den Messerbalken (10) wirkender weiterer Antrieb (12) vorgesehen ist.

5. Vorrichtung nach Anspruch 4,
**dadurch gekennzeichnet,**
**dass** der Antrieb (12) aus einem Servomotor mit von demselben angetriebenem Kugelgewindetrieb besteht.

6. Vorrichtung nach einem der Ansprüche 1 bis 5,
**dadurch gekennzeichnet,**
**dass** das andere Messer (9) fest mit einer unteren Traverse (13) des Rahmens (7) verbunden ist.

## Claims

1. Device (1) for cutting thin-layered material (2), in particular metal strips, tissue, plastics, paper, cardboard, composite materials or the like, said thin-layered material (2) being unwound by coils, wherein the device (1) comprises two knives (8, 9) mounted in a frame (7) with their blades (5, 6) opposing each other, of which at least one knife (8) is movable towards the other knife (9) in a vertical direction (a), and wherein the frame (7) comprising the knives (8, 9) can be pivoted to the right and left at a predetermined angle (α) around a vertical axis (16) from its base position (7a), which is transverse to the moving direction (b) of the thin-layered material (2), by means of a rotary drive (15) arranged in a base frame (14) of the device (1),
**characterized in that**
the rotary drive (15) for the frame (7) is formed without gears and comprises a synchronous motor (17) excited by permanent magnets, the rotor of the synchronous motor (17) acting directly on the frame (7).

2. Device according to claim 1,
**characterized in that**
the pivoting angle (α) of the frame (7) or the rotary drive (15), respectively, can be programmed freely variable via the system control.

3. Device according to claim 1 or 2,
**characterized in that**
the one knife (8) is arranged at a knife bar (10) which is vertically guided and mounted between the side-member (11) of the frame (7).

4. Device according to any one of the claims 1 to 3,
**characterized in that**
in order to vertically move the one knife (8) or rather the knife bar (10), a further drive (12) acting centrally on the knife bar (10) is provided.

5. Device according to claim 4,
**characterized in that**
the drive (12) consists of a servomotor driven by the same ball screw.

6. Device according to any one of the claims 1 to 5,
**characterized in that**
the other knife (9) is fixed firmly to a lower traverse (13) of the frame (7).

## Revendications

1. Dispositif (1) pour trancher un matériau (2) en couche mince, en particulier des bandes métalliques, des tissus, des plastiques, du papier, du carton, des matériaux composites ou similaires, ledit matériau (2) en couche mince étant déroulé par des bobines, dans lequel le dispositif (1) comprend deux couteaux (8, 9) montés dans un cadre (7) avec leurs tranchants s'étant opposés, dont au moins un couteau (8) est déplaçable en direction de l'autre couteau (9) dans une direction verticale (a), et dans lequel le cadre (7) comprenant les couteaux (8, 9) peut être pivoté à droite et à gauche à un angle prédéterminé (α) autour d'un axe vertical (16) d'une position de base (7a), qui est transverse à la direction de mouvement (b) du matériau (2) en couche mince, au moyen d'un entraînement rotatif (15) disposé dans un cadre de base (14) du dispositif (1),
**caractérisé en ce que**
l'entraînement rotatif (15) pour le cadre (7) est formé sans engrenages et comprend un moteur synchrone (17) excité par aimants permanents, le rotor du moteur synchrone (17) agissant directement sur le cadre (7).

2. Dispositif selon la revendication 1,
**caractérisé en ce que**
l'angle de pivotement (α) du cadre (7) ou de l'entraînement rotatif, respectivement, est programmable librement variable par le système de commande.

3. Dispositif selon la revendication 1 ou 2,
**caractérisé en ce que**
l'un couteau (8) est disposé à une barre de couteau (10) qui est guidée verticalement et montée entre les éléments latéraux (11) du cadre (7).

4. Dispositif selon l'une quelconque des revendications 1 à 3,
**caractérisé en ce que**
pour déplacer verticalement l'un couteau (8) ou plutôt la barre de couteau (10), un outre entraînement (12) agissant centralement sur la barre de couteau (10) est prévu.

5. Dispositif selon la revendication 4,
**caractérisé en ce que**
l'entraînement (12) consiste en un servomoteur entraîné par la même vis à billes.

6. Dispositif selon l'une quelconque des revendications 1 à 5,
**caractérisé en ce que**
l'autre couteau (9) est relié de manière solidaire avec une traverse inférieure (13) du cadre (7).
